# EUROPEAN PATENT SPECIFICATION

(11) **EP 1 466 820 B1**
(45) Date of publication and mention of the grant of the patent: **29.08.2007**
(21) Application number: 04075753.6
(22) Date of filing: 08.03.2004
(51) Int. Cl.: B62J 13/04

(54) **Chain guard assembly for a bicycle**
Kettenschutzanordnung für ein Fahrrad
Garde-chaîne pour bicyclette

(30) Priority: 10.03.2003 NL 1022879
(43) Date of publication of application: 13.10.2004
(73) Proprietor: De Woerd B.V., NL-3771 VG Barneveld (NL)
(72) Inventor: van der Veen, Onno Gerard Pieter, 7411 EM Deventer (NL); Jonkman, Pim Jacob Roelof, 3812 XK Amersfoort (NL); Versloot, Eric Jan, 3532 GN Utrecht (NL)
(74) Representative: Brookhuis, Hendrik Jan Arnold

(56) References cited:
- DE-A1- 3 421 210
- DE-A1- 19 963 819
- DE-C- 80 868
- GB-A- 369 049
- GB-A- 401 855
- GB-A- 1 318 928
- GB-A- 189 719 725
- GB-A- 191 414 839

## Description

The invention relates to a chain guard assembly for a bicycle. Chain guard assemblies for bicycles are known from the prior art, with a chain guard for protecting the bicycle chain, front securing means for securing the chain guard to or in the vicinity of the bottom bracket of the bicycle, and with rear securing means for securing the chain guard to the chain stay of the bicycle.

In a generally known type of bicycle, the frame is designed in such a manner that the bicycle chain crosses the chain stay of the bicycle. For example DE 199 63 819 discloses a chain guard assembly for a bicycle according to the preamble of claim 1.

In the bicycle industry, efficient production of all kinds of designs of bicycles is highly important. The different designs mean that a bicycle manufacturer often requires a considerable number of differently designed chain guard assemblies, even though they appear the same. The difference in design of the chain guard assemblies is then often attributable to a difference in position of the bicycle chain, also known as the chain line, with respect to the chain stay to which the chain guard is secured.

It is an object of the present invention, in accordance with a first aspect thereof, to provide a chain guard assembly which can easily be adapted to the position of the chain line and chain stay.

The invention, in accordance with its first aspect, provides a chain guard assembly in accordance with claim 1.

The design of the rear securing means makes it possible to adjust the position of the carrier with respect to the chain stay within a defined angular range. The adjustment of the desired position may be carried out by the manufacturer of the chain guard assemblies and/or during fitting of the chain guard assembly to the bicycle, if appropriate depending on the design of the rear securing means.

Furthermore, the invention relates to a bicycle provided with a chain guard assembly in accordance with the invention, and the method(s) for assembling a bicycle using a chain guard assembly in accordance with the invention as explained above.

Of course, the various aspects of the invention can also be used in various combinations, as will become apparent, inter alia, from the following description of a preferred embodiment of the chain guard assembly according to the invention and the assembly of a bicycle having this chain guard assembly.

In the drawing:
Fig. 1 shows a perspective view of part of a bicycle frame and a carrier and securing member of the chain guard assembly, and also a bottom bracket bearing assembly of the bicycle, in an unfitted state,
Fig. 2 shows the components from Figure 1 in a fitted state,
Fig. 3 shows the illustration from Figure 2 after the rear wheel, the chainring and the bicycle chain have been fitted,
Fig. 4 shows the illustration from Figure 3 together with the centre part of the chain guard which is to be fitted,
Fig. 5 shows the illustration from Figure 4 with the centre part fitted and with the top part and bottom part of the chain guard still to be fitted,
Fig. 6 shows a cut-away illustration of the fitted chain guard assembly,
Fig. 7 shows a detailed illustration including the securing member,
Fig. 8 shows another detailed illustration including the securing member,
Figs 9a,b show a variant embodiment of the securing member,
Figs. 10a,b show another variant embodiment of the securing member,
Fig. 11 shows yet another variant embodiment of the securing member,
Fig. 12 shows yet another variant embodiment of the securing member,
Fig. 13 shows yet another variant embodiment of the securing member, and
Fig. 14 shows yet another variant embodiment of the securing member.

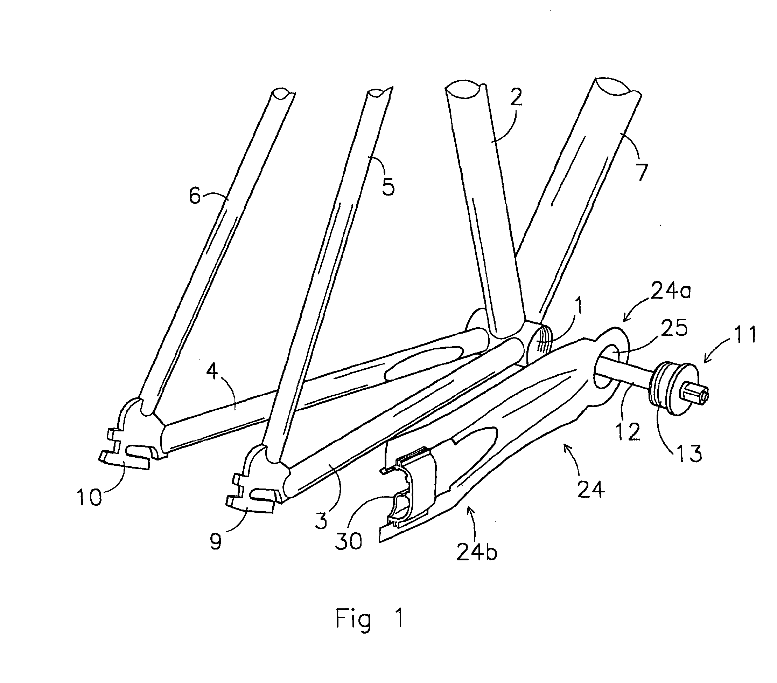

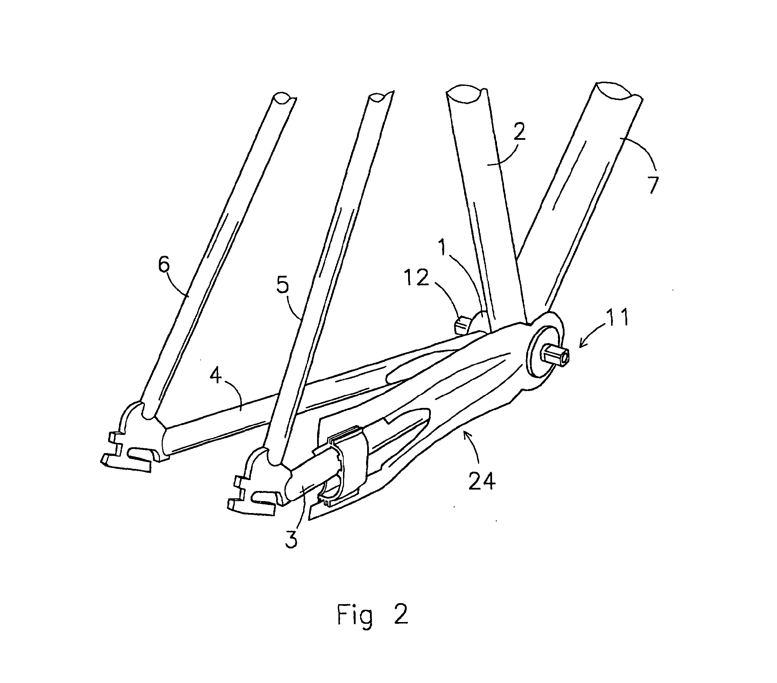

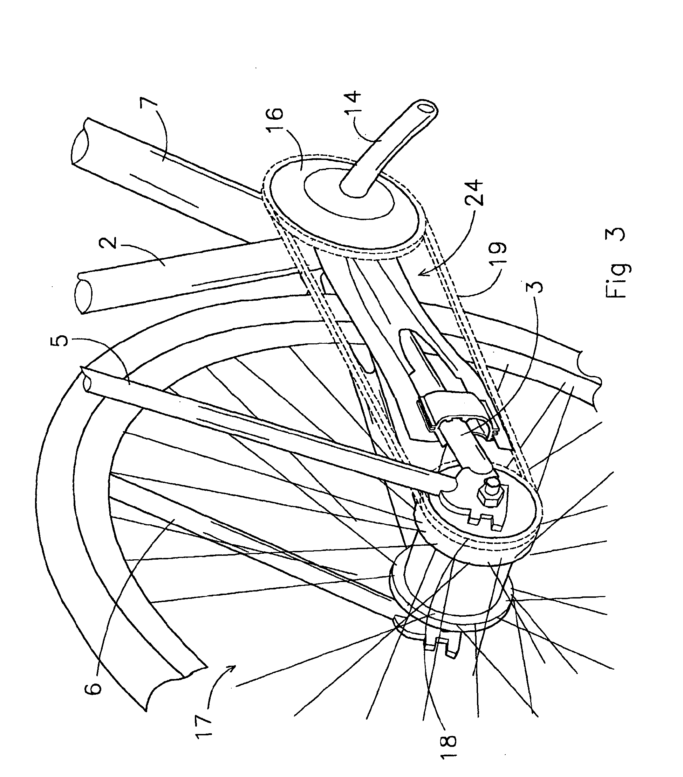

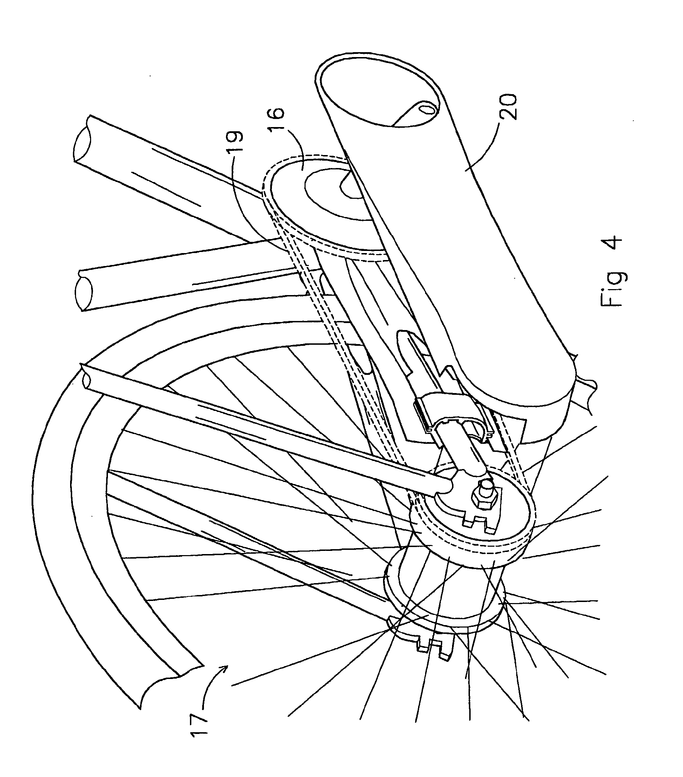

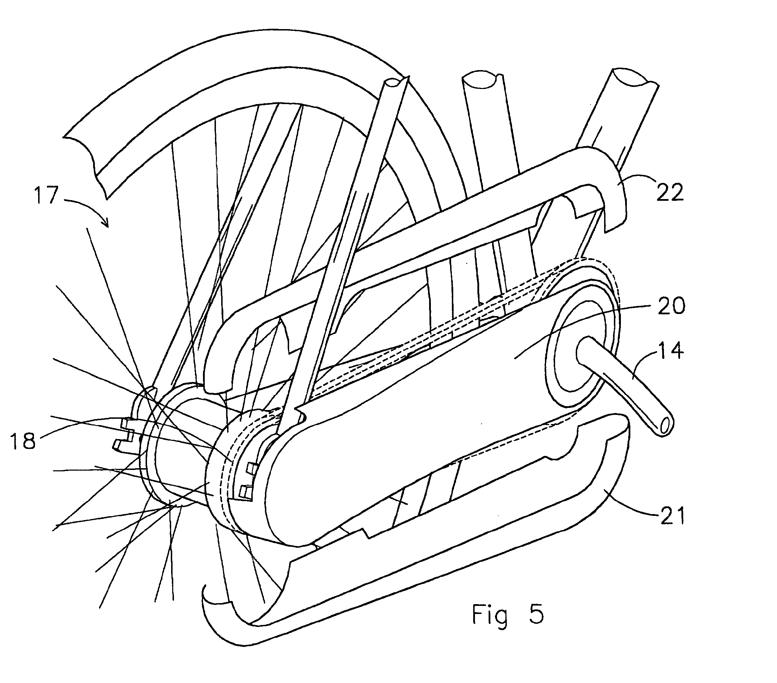

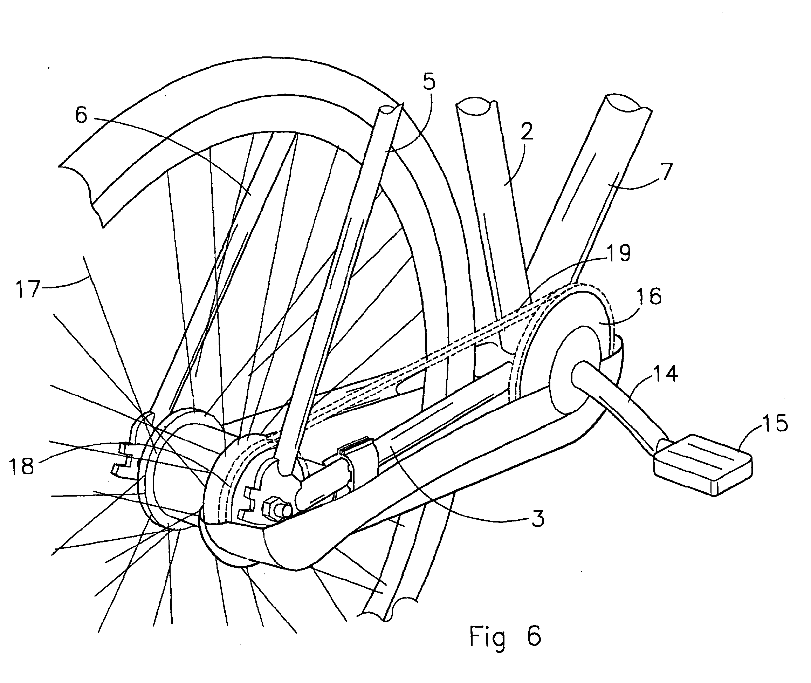

A preferred embodiment of a chain guard assembly according to the invention, which is used to protect the bicycle chain, will be explained with reference to Figures 1-8.

Figures 1-8 show part of a bicycle frame having a bottom bracket 1, a seat tube 2, chain stays 3, 4, seat stays 5, 6 and down tubes 7 leading to the headset of the bicycle (not illustrated).

The chain stays 3, 5 and seat stays 4, 6 meet one another at respective hub-securing plates 9, 10.

A bottom bracket bearing assembly 11 having a spindle 12 and having bearings 13 is fitted in the bottom bracket 1. A crank 14 for a pedal 15, as well as a chainring 16, are also fitted to the spindle 12. A rear wheel 17 having a hub provided with a sprocket 18 is fitted between the chain stays and seat stays. A bicycle chain 19 is arranged around the sprockets 16, 18. Since the chainring 16 lies on the outside of the frame and the sprocket 18 lies on the inside of the chain stays and seat stays 3, 5, the line of the chain 19 crosses the chain stay 3, as seen from above.

To protect the chain 19, a chain guard assembly is provided, and this will be explained in more detail below.

The chain guard assembly comprises a chain guard, which can be assembled from a centre part 20, bottom part 21 and top part 22. Furthermore, there are front securing means for securing the chain guard to or in the vicinity of the bottom bracket 1 of the bicycle, and rear securing means for securing the chain guard to the chain stay 3 of the bicycle.

These front securing means and rear securing means in this case comprise a common carrier 24, which carrier 24 has a front part 24a, which is provided with an opening 25 at the location of the bottom bracket 1, and a rear part 24b, which is designed for the fitting of a securing member 30, which is designed to be secured to the chain stay 3.

The chain guard assembly is in this case designed in such a manner that the carrier 24 can be secured, as a separate component, to the frame, and that then the parts of the chain guard are fitted.

The carrier 24 is designed as a plate element, preferably made from suitable plastic, if appropriate fibre-reinforced plastic or the like.

The front part 24a of the carrier 24 can be clamped between the edge of the bottom bracket 1 and the bottom bracket bearing assembly 11 which is to be fitted therein.

The rear part 24b of the carrier 24 does not run parallel to the chain stay 3, but rather is positioned at an angle thereto. Furthermore, the rear part 24b has a bottom limb 26 and a top limb 27, with a slot 28 between them, which is open at the rear end of the carrier 24, for the chain stay 3 to pass through.

The limbs 26, 27, on the sides which face one another, have parallel edges and thereby form a longitudinal guide for the securing member 30, which engages on the parallel edges of the limbs 26, 27.

The securing member 30 is slid onto the limbs 26, 27 and is designed as a click-fit securing member, so that a click-fit connection to the chain stay 3 can be produced by pressing the member 30 onto this chain stay 3.

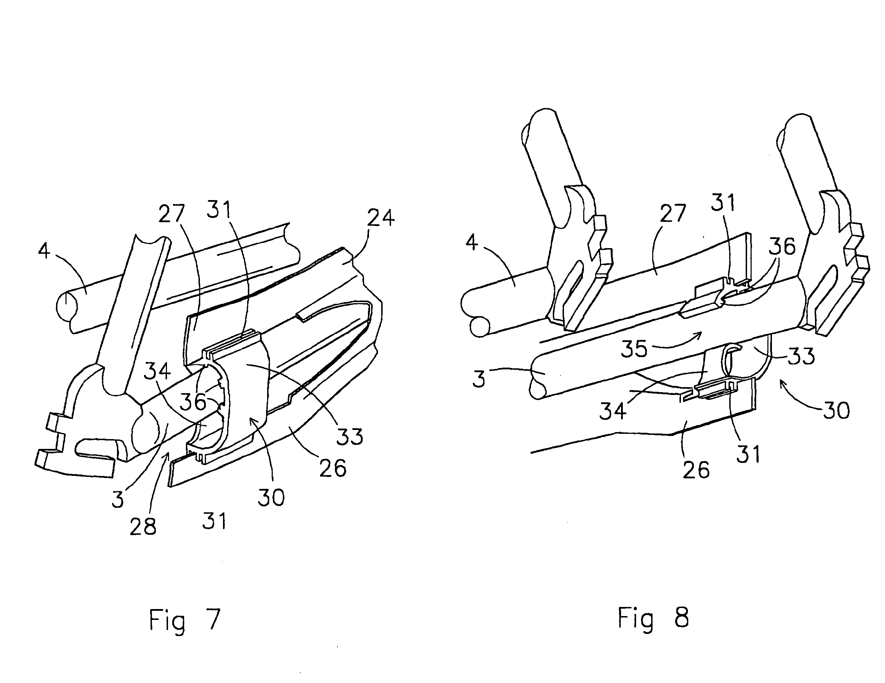

As can be seen clearly from Figures 7 and 8, the body of the securing member 30 is provided with a plurality of slots 31 located next to one another, in this example with three such slots, in which the limbs 26, 27 can be received.

The securing of the carrier 24 to the chain stay 3 as described above allows the angular position of the chain guard with respect to the chain stay to be adjusted, so that this angular position can be matched to the angle at which the bicycle chain 19 crosses the chain stay 3.

This is achieved here firstly by virtue of the fact that the member 30 creates securing to the chain stay 3 at a location which, as seen in the direction of the chain stay 3, can be adjusted with respect to the chain guard within an adjustment range defined by the limbs 26, 27. Since the limbs 26, 27 are at an angle with respect to the chain stay 3, a longitudinal displacement of the member 30 along the limbs 26, 27 causes a transverse displacement of the rear part of the carrier 24 (and therefore of the chain guard) with respect to the frame. In practice, an adjustment range of a few centimetres, for example 8 centimetres proves sufficient.

Secondly, an adjustment of the transverse distance between carrier 24 and chain stay 3 can be achieved by means of the choice of slots 31 in which the limbs 26, 27 are positioned. In this respect, the member 30 comprises a plurality of discrete transverse distances, while the longitudinal displacement is continuously adjustable.

In a variant which is not shown, the carrier 24 is provided with indexing formations for creating discrete locations of the securing member 30 with respect to the carrier 24, so that a plurality of discrete locations are created within the adjustment range. This indexing may, for example, be such that the manufacturer of the chain guard assemblies produces a carrier 24 which is suitable for a plurality of types of bicycles and uses the indexing to indicate the position in which the member 30 is to be fitted for the bicycle in question.

The securing member 30 is in this case a single-piece plastic member with a body which forms a space for receiving the chain stay 3. The body has a stable hook part 33 which is designed to engage over the top side of the chain stay 3, and an elastic blocking lip 34, which together with the hook part 33 delimits an entry opening 35 for the chain stay 3.

Elastic deformation of the blocking lip 34 allows the chain stay 3 to be moved into the space, after which the blocking lip springs back elastically into a blocking position, so that the chain stay 3 is locked in place.

Supporting ribs 36, which bear against the chain stay 3, are formed on the inner circumference of the body, distributed around part of the circumference.

The securing member 30 can be matched to different designs of chain stays, for example different diameters, by adjustment of the dimensions and/or position of supporting ribs 30, by virtue of associated parts of the injection mould being changed.

After the carrier 24 has been fitted to the frame, the chain ring 16, the crank 14, the rear wheel 17 and the chain 19 are fitted.

Then, the centre part 20 is fitted to the carrier 24, for example using click-fit securing members and/or hook securing members (not shown). It is preferable to provide interacting positioning means, so that the centre part 20 adopts precisely the correct position with respect to the carrier.

Finally, the top part 22 and the bottom part 21 of the chain guard are attached, if appropriate also using click-fit securing members.

It will be clear that the aspects of the invention which have been described in combination here may also be employed in other combinations or separately. By way of example, the idea of the click-fit securing to the chain stay can also be employed in a conventional chain guard.

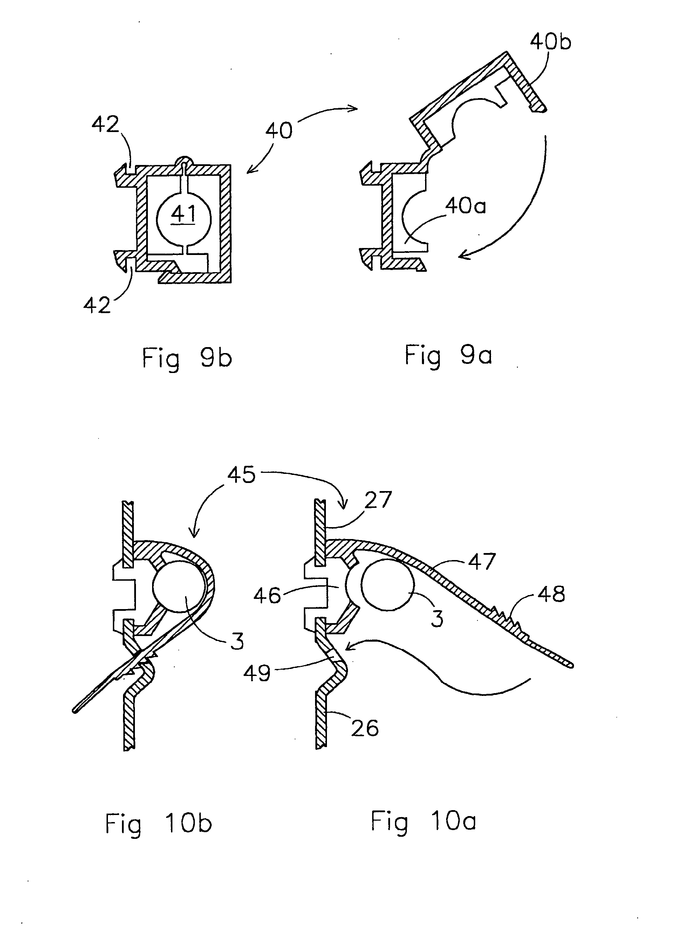

Figures 9a, 9b show a securing member 40 as an alternative to member 30. The member 40 has two hinged parts 40a, 40b which in the closed position form the space 41 for the chain stay. Part 40a is intended to be fitted to the chain guard, and is in this example provided with slots 42 for the limbs 26, 27 of the carrier 24.

That part of each part 40a, 40b which surrounds the space 42 may be moulded using an exchangeable mould part, so that the position of the space 40 can be adjusted during the injection moulding. In particular, adjustment is effected in the transverse direction, but of course it is also conceivable for an adjustment in the vertical direction or alternatively a combination of such adjustments to be employed.

Figures 10a, b show securing member 45, limbs 26, 27 of the carrier 24 and chain stay 3. The securing member 45 forms a supporting part 46 for the chain stay 3 and has a flexible tensioning belt 47 for holding the stay 3 against the said supporting part 46. The tensioning belt 47 has hook ribs 48 which can hook into an opening 49 in the limb 26.

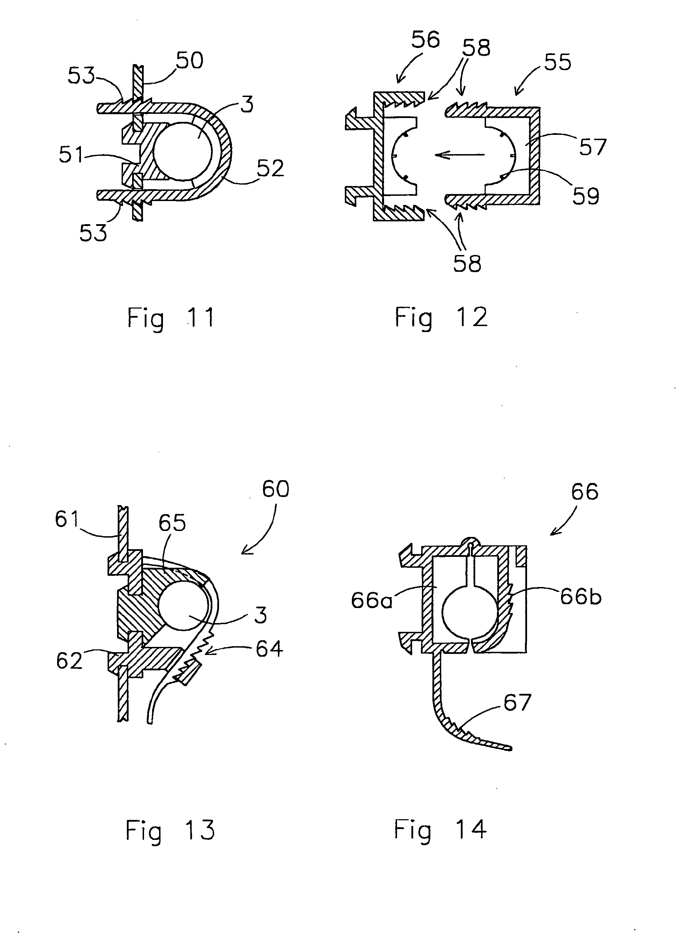

Figure 11 shows a rear wall 50 of a chain guard provided with a supporting part 51 for chain stay 3. A U-shaped bracket part 52 can be fixed, by means of its limbs provided with hook ribs 53, in openings in the rear wall 50 and then presses the chain stay 3 onto the supporting part 51. The supporting part 52 is removable. The provision of supporting parts 51 with different dimensions makes it possible to adjust the transverse distance between the chain guard and the stay 3.

Figure 12 shows a securing member 55 which is intended for fitting to a chain guard and a chain stay. The member 55 has a supporting part 56, which is fitted to the chain guard. The clamping part 57 and the supporting part 56 are provided with interacting hook means 58 for locking them with respect to one another around the chain stay (not shown). Matching to the diameter of the stay is brought about by a flexible design of supporting ribs 59 which bear against the chain stay.

Figure 13 shows a securing member 60, stay 3 and rear wall 61 of a chain guard. A base part 62 is fitted to the rear wall 61 and is provided with a flexible tensioning belt 63 and an insertion opening for fixing that part of the belt 63 which is provided with hook ribs 64. To adjust the position of the stay 3 with respect to the rear wall 61 and/or to match this position to the stay 3, an exchangeable supporting part 65 is positioned on the base part 62.

Figure 14 shows a variant of Figures 10a, b. The securing member 66 has a tensioning belt 67 for pulling the hinged parts 66a, 66b towards one another.

It will be clear to the person skilled in the art that the measures and aspects of the invention which are described here can also be applied to the vertical adjustment of the position of the chain guard with respect to the chain stay.

## Claims

1. Chain guard assembly for a bicycle being of the type in which a bicycle chain (19) crosses a chain stay (3), comprising:
- a chain guard for protecting a bicycle chain (19),
- front securing means for securing the chain guard to or in the vicinity of a bottom bracket of a bicycle,
- rear securing means for securing the chain guard to a chain stay (3) of a bicycle,
**characterized in that** the front securing means and the rear securing means comprise a common carrier (24) which can be secured to the chain guard, which carrier (24) has a front part (24a), which can be secured to or in the vicinity of a bottom bracket (1) of a bicycle, and a rear part (24b), which can be positioned at an angle to a chain stay (3), to which rear part (24b) a securing member (30) is fitted which is designed to be secured to a chain stay (3), and **in that**
the securing member (30) and the rear part (24b) are designed to allow the adjustment of the transverse distance of the rear part (24b) of the carrier (24) with respect to a chain stay (3) for obtaining an adjustable angular position of the carrier (24) with respect to a chain stay (3), so that this angular position can be matched to the angle at which a bicycle chain (19) crosses a chain stay (3) and/or for the vertical adjustment of the position of the chain guard with respect to a chain stay (3).

2. Chain guard assembly according to claim 1, in which the carrier (24) can be secured to a bicycle and the one or more parts of the chain guard can then be secured to the carrier (24), and in which, for example, the chain guard has a centre part (20) which can be secured over the carrier (24) using interacting coupling means, for example using click-fit and/or hook securing members, as well as a top part (22) and a bottom part (21).

3. Chain guard assembly according to one or more of the preceding claims, in which the rear securing means is provided with indexing formations for creating a plurality of discrete angular positions.

4. Chain guard assembly according to one of the preceding claims, in which the rear securing means, as seen in the direction of a chain stay (3), secure the chain guard to a chain stay (3) at a location which is fixed with respect to the carrier (24).

5. Chain guard assembly according to one of claims 1-3, in which the rear securing means, as seen in the direction of the chain stay (3), secure the chain guard to a chain stay (3) at a location which is adjustable, within an adjustment range, with respect to the carrier (24), the rear securing means preferably creating a plurality of discrete locations within the adjustment range or creating continuous adjustment of the securing location within the adjustment range.

6. Chain guard assembly according to one or more of the preceding claims, in which the rear securing means create an adjustable transverse distance between the chain guard and a chain stay (3), the transverse distance preferably being adjustable such that it can adopt a plurality of discrete transverse distances, or the transverse distance being continuously adjustable.

7. Chain guard assembly according to one or more of the preceding claims, in which the rear securing means comprise a longitudinal guide which is provided on the carrier (24) and extends substantially in the direction of the chain stay (3), and a securing member which engages on the said longitudinal guide and is designed to be secured to a chain stay (3).

8. Chain guard assembly according to one or more of the preceding claims, in which the rear part of the carrier (24) has a top limb (27) and a bottom limb (26), between which there is a slot (28), which is open at the rear end of the carrier (24), for the chain stay (3) to pass through, those sides of the limbs (26, 27) which face one another, in a preferred embodiment, having parallel edges, thereby forming the longitudinal guide for a securing member which engages on the parallel edges of the limbs (26, 27).

9. Chain guard assembly according to one of the preceding claims, in which the carrier (24) is provided with an opening at the location of a bottom bracket of a bicycle, and in which preferably the front part of the carrier (24) can be clamped between the edge of a bottom bracket and a bottom bracket bearing assembly which is to be arranged therein.

10. Chain guard assembly according to one or more of the preceding claims, in which the rear securing means are designed in such a manner that they allow the carrier (24) to be fitted to a chain stay (3) without the need for a tool.

11. Chain guard assembly according to one or more of the preceding claims, in which the rear securing means comprise a click-fit securing member (30) which, when a suitable force is exerted, creates a click-fit connection to a chain stay (3).

12. Chain guard assembly according to claim 11, in which the securing member (30) has a body which forms a space for accommodating a chain stay (3), which body has a stable hook part (33) which is designed to engage around the chain stay (3), preferably over the top side thereof, and an elastic blocking lip (34), which, together with the hook part (33), delimits an entry opening for the chain stay (3), so that through elastic deformation of the blocking lip (34) a chain stay (3) can be moved into the space, after which the blocking lip (34) elastically springs back into a blocking position.

13. Chain guard assembly according to one or more of the preceding claims, in which the rear securing means comprise a securing member with a body for receiving the chain stay (3), which body comprises a base part which can be secured to the carrier (24) or is integral with the carrier (24), and one or more exchangeable parts, which are accommodated or can be accommodated in the base part and delimit the space for accommodating a chain stay (3), which exchangeable parts create a position of the space for a chain stay (3) which can be varied in the transverse direction with respect to the base part and therefore the carrier (24).

14. Chain guard assembly according to claim 13, in which the securing member is a plastic injection-moulded component, and the one or more exchangeable parts are integral with the securing member and are created by changing parts in the injection mould.

15. Chain guard assembly according to claim 13 or 14, in which the exchangeable parts are designed as support ribs (59) which bear against a chain stay (3) and are distributed around the periphery of the space for a chain stay (3).

## Patentansprüche

1. Kettenschutzsystem für ein Fahrrad, das von der Bauart ist, bei der eine Fahrradkette (19) eine Kettenstrebe (3) überquert, Folgendes umfassend:
- einen Kettenschutz, um die Fahrradkette (19) zu schützen,
- vordere Befestigungseinrichtungen, um den Kettenschutz an einer oder in Nähe einer unteren Stütze eines Fahrrads zu befestigen,
- hintere Befestigungseinrichtungen, um den Kettenschutz an einer Kettenstrebe (3) eines Fahrrads zu befestigen,
**dadurch gekennzeichnet, dass** die vorderen Befestigungseinrichtungen und die hinteren Befestigungseinrichtungen einen gemeinsamen Träger (24) umfassen, der am Kettenschutz befestigt werden kann, welcher Träger (24) ein vorderes Teil (24a), das an einer oder in Nähe einer unteren Stütze (1) eines Fahrrads befestigt werden kann, und ein hinteres Teil (24b) aufweist, das in einem Winkel zu einer Kettenstrebe (3) angeordnet sein kann, an welchem hinteren Teil (24b) ein Befestigungselement (30) angebracht ist, das dazu ausgelegt ist, an einer Kettenstrebe (3) befestigt zu werden, und dass
das Befestigungselement (30) und das hintere Teil (24b) dazu ausgelegt sind, die Einstellung des Querabstands des hinteren Teils (24b) des Trägers (24) in Bezug auf eine Kettenstrebe (3) zuzulassen, um eine einstellbare Winkellage des Trägers (24) in Bezug auf eine Kettenstrebe (3) zu erhalten, so dass diese Winkellage an den Winkel angepasst werden kann, mit dem eine Fahrradkette (19) eine Kettenstrebe (3) überquert, und/oder für die vertikale Einstellung der Lage des Kettenschutzes in Bezug auf eine Kettenstrebe (3).

2. Kettenschutzsystem nach Anspruch 1, wobei der Träger (24) an einem Fahrrad befestigt werden kann, und dann das eine Teil oder die mehreren Teile des Kettenschutzes am Träger (24) befestigt werden kann/können, und wobei beispielsweise der Kettenschutz ein mittleres Teil (20), das unter Verwendung zusammenwirkender Verbindungseinrichtungen über dem Träger (24) befestigt werden kann, indem beispielsweise Einrast- und/oder Hakenbefestigungselemente verwendet werden, sowie ein oberes Teil (22) und ein unteres Teil (21) aufweist.

3. Kettenschutzsystem nach einem oder mehreren der vorhergehenden Ansprüche, wobei die hinteren Befestigungseinrichtungen mit Graduierungseinteilungen versehen sind, um mehrere eigenständige Winkellagen zu schaffen.

4. Kettenschutzsystem nach einem der vorhergehenden Ansprüche, wobei die hinteren Befestigungseinrichtungen, in der Richtung einer Kettenstrebe (3) gesehen, den Kettenschutz an einer Kettenstrebe (3) an einer Stelle befestigen, die in Bezug auf den Träger (24) feststehend ist.

5. Kettenschutzsystem nach einem der Ansprüche 1 bis 3, wobei die hinteren Befestigungseinrichtungen, in der Richtung der Kettenstrebe (3) gesehen, den Kettenschutz an einer Stelle an einer Kettenstrebe (3) befestigen, die in Bezug auf den Träger (24) innerhalb eines Einstellbereichs einstellbar ist, wobei die hinteren Befestigungseinrichtungen vorzugsweise mehrere eigenständige Stellen innerhalb des Einstellungsbereichs schaffen, oder eine kontinuierliche Einstellung der Befestigungsstelle innerhalb des Einstellungsbereichs schaffen.

6. Kettenschutzsystem nach einem oder mehreren der vorhergehenden Ansprüche, wobei die hinteren Befestigungseinrichtungen einen einstellbaren Querabstand zwischen dem Kettenschutz und einer Kettenstrebe (3) schaffen, wobei der Querabstand vorzugsweise so einstellbar ist, dass er mehrere eigenständige Querabstände annehmen kann, oder der Querabstand kontinuierlich einstellbar ist.

7. Kettenschutzsystem nach einem oder mehreren der vorhergehenden Ansprüche, wobei die hinteren Befestigungseinrichtungen eine Längsführung, die am Träger (24) vorgesehen ist und sich im Wesentlichen in der Richtung der Kettenstrebe (3) erstreckt, und ein Befestigungselement umfassen, das an der Längsführung angreift und dazu ausgelegt ist, an einer Kettenstrebe (3) befestigt zu werden.

8. Kettenschutzsystem nach einem oder mehreren der vorhergehenden Ansprüche, wobei das hintere Teil des Trägers (24) ein oberes Glied (27) und ein unteres Glied (26) aufweist, zwischen denen eine Ausnehmung (28) besteht, die am hinteren Ende des Trägers (24) offen ist, damit die Kettenstrebe (3) hindurchgehen kann, wobei diejenigen Seiten der Glieder (26, 27), die einander zugewandt sind, in einer bevorzugten Ausführungsform parallele Kanten haben, wodurch die Längsführung für ein Befestigungselement gebildet ist, das an den parallelen Kanten der Glieder (26, 27) angreift.

9. Kettenschutzsystem nach einem oder mehreren der vorhergehenden Ansprüche, wobei der Träger (24) an der Stelle einer unteren Stütze eines Fahrrads mit einer Öffnung versehen ist, und in welcher vorzugsweise das vordere Teil des Trägers (24) zwischen der Kante einer unteren Stütze und einem Lagersystem für die untere Stütze, das darin angeordnet werden soll, eingeklemmt werden kann.

10. Kettenschutzsystem nach einem oder mehreren der vorhergehenden Ansprüche, wobei die hinteren Befestigungseinrichtungen so ausgelegt sind, dass sie es zulassen, dass der Träger (24) an einer Kettenstrebe (3) angebracht werden kann, ohne dass ein Werkzeug verwendet werden muss.

11. Kettenschutzsystem nach einem oder mehreren der vorhergehenden Ansprüche, wobei die hinteren Befestigungseinrichtungen ein Einrastbefestigungselement (30) umfassen, das, wenn eine geeignete Kraft ausgeübt wird, eine Einrastverbindung mit einer Kettenstrebe (3) herstellt.

12. Kettenschutzsystem nach Anspruch 11, wobei das Befestigungselement (30) einen Körper hat, der einen Raum zur Aufnahme einer Kettenstrebe (3) bildet, welcher Körper ein stabiles Hakenteil (33), das dazu ausgelegt ist, um die Kettenstrebe (3) vorzugsweise über deren Oberseite herum anzugreifen, und eine elastische Arretierungslippe (34) aufweist, die zusammen mit dem Hakenteil (33) eine Einlassöffnung für die Kettenstrebe (3) so begrenzt, dass durch eine elastische Verformung der Arretierungslippe (34) eine Kettenstrebe (3) in den Raum bewegt werden kann, wonach die Arretierungslippe (34) elastisch in eine Arretierungsstellung zurückspringt.

13. Kettenschutzsystem nach einem oder mehreren der vorhergehenden Ansprüche, wobei die hinteren Befestigungseinrichtungen ein Befestigungselement mit einem Körper zur Aufnahme der Kettenstrebe (3) umfassen, welcher Körper ein Unterteil umfasst, das am Träger (24) befestigt werden kann oder in einem Stück mit dem Träger (24) ausgebildet ist, und ein austauschbares Teil oder mehrere austauschbare Teile, das bzw. die im Unterteil untergebracht ist/sind oder darin untergebracht werden kann/können und den Raum zur Aufnahme einer Kettenstrebe (3) begrenzen, welche austauschbaren Teile eine Position des Raums für eine Kettenstrebe (3) schaffen, die in der Querrichtung in Bezug auf das Unterteil und deshalb den Träger (24) verändert werden kann.

14. Kettenschutzsystem nach Anspruch 13, wobei das Befestigungselement ein Bauteil aus Kunststoffspritzguss ist und das eine austauschbare Teil oder die mehreren austauschbaren Teile in einem Stück mit dem Befestigungselement ausgebildet ist/sind und durch Austauschen von Teilen in der Spritzgussform hergestellt wird/werden.

15. Kettenschutzsystem nach Anspruch 13 oder 14, wobei die austauschbaren Teile als Stützrippen (59) ausgebildet sind, die gegen eine Kettenstrebe (3) abstützen und um den Umfang des Raums für eine Kettenstrebe (3) herum verteilt sind.

## Revendications

1. Ensemble garde-chaîne pour une bicyclette, du type dans lequel une chaîne de bicyclette (19) croise l'étai de chaîne (3), comprenant :
- un garde-chaîne, pour protéger une chaîne de bicyclette (19),
- des moyens de fixation avant, pour fixer le garde-chaîne à ou à proximité d'un support inférieur d'une bicyclette,
- des moyens de fixation arrière, pour fixer le garde-chaîne à un étai de chaîne (3) d'une bicyclette,
**caractérisé en ce que** les moyens de fixation avant et les moyens de fixation arrière comprennent un support commun (24) pouvant être fixé au garde-chaîne, le support (24) ayant une partie avant (24a) pouvant être fixée à ou à proximité d'un support inférieur (1) d'une bicyclette, et une partie arrière (24b) qui peut être positionnée sous un certain angle par rapport à un étai de chaîne (3), partie de chaîne arrière (24b) sur laquelle un organe de fixation (30) est monté, conçu pour être fixé à un étai de chaîne (3), et **en ce que**
l'organe de fixation (30) et la partie arrière (24b) sont conçus pour permettre le réglage de la distance transversale de la partie arrière (24b) du support (24) par rapport à un étai de chaîne (3), pour obtenir une position angulaire ajustable du support (24) par rapport à un étai de chaîne (3), de manière que cette position angulaire puisse être appariée à l'angle auquel une chaîne de bicyclette (19) croise un étai de chaîne (3) et/ou pour le réglage vertical de la position du garde-chaîne par rapport à un étai de chaîne (3)

2. Ensemble garde-chaîne selon la revendication 1, dans lequel le support (24) peut être fixé à une bicyclette et les unes ou plusieurs parties du garde-chaîne peuvent ensuite être fixées au support (24), et dans lequel, par exemple, le garde-chaîne comprend une partie centrale (20), pouvant être fixée sur le support (24) en utilisant des moyens de couplage interagissants, par exemple, en utilisant des organes de fixation à montage par encliquetage et/ou à crochets, ainsi qu'une partie supérieure (22) et une partie inférieure (21).

3. Ensemble garde-chaîne selon l'une ou plusieurs des revendications précédentes, dans lequel des moyens de fixation arrière sont prévus, avec des formations d'indexation pour créer une pluralité de positions angulaires discrètes.

4. Ensemble garde-chaîne selon l'une ou plusieurs des revendications précédentes, dans lequel les moyens de fixation arrière, en observant dans la direction d'un étai de chaîne (3), fixent le garde-chaîne à un étai de chaîne (3), en un emplacement qui est fixé par rapport au support (24).

5. Ensemble garde-chaîne selon l'une des revendications 1 à 3, dans lequel les moyens de fixation arrière, en observant dans la direction de l'étai de chaîne (3), fixent le garde-chaîne à un étai de chaîne (3) en un emplacement ajustable, dans les limites d'une plage de réglage, par rapport au support (24), les moyens de fixation arrière de préférence créant une pluralité de positions discrètes dans les limites de la plage de réglage, ou créant un réglage continu de la position de fixation dans les limites de la plage de réglage.

6. Ensemble garde-chaîne selon l'une ou plusieurs des revendications précédentes, dans lequel les moyens de fixation arrière créent une distance transversale ajustable entre le garde-chaîne et un étai de chaîne (3), la distance transversale de préférence étant ajustable de manière qu'elle puisse adopter une pluralité de distances transversales discrètes, ou bien la distance transversale étant ajustable de façon continue.

7. Ensemble garde-chaîne selon l'une ou plusieurs des revendications précédentes, dans lequel les moyens de fixation arrière comprennent un guide longitudinal, prévu sur le support (24) et s'étendant sensiblement dans la direction de l'étai de chaîne (3), et un organe de fixation, qui vient en prise sur ledit guide longitudinal et est conçu pour être fixé à un étai de chaîne (3).

8. Ensemble garde-chaîne selon l'une ou plusieurs des revendications précédentes, dans lequel la partie arrière du support (24) présente une branche supérieure (27) et une branche inférieure (26), entre lesquelles est prévue une fente (28), ouverte à l'extrémité arrière du support (24), pour que l'étai de chaîne (3) passe à travers elle, les côtés des branches (26, 27), qui sont placés en regard l'un de l'autre dans un mode de réalisation préféré, ayant des bords parallèles formant, de cette manière, le guide longitudinal d'un organe de fixation venant en prise sur les bords parallèles des branches (26, 27) .

9. Ensemble garde-chaîne selon l'une des revendications précédentes, dans lequel le support (24) est muni d'une ouverture à l'emplacement d'une console inférieure d'une bicyclette, et dans lequel, de préférence, la partie avant du support (24) peut être serrée entre le bord d'une console inférieure et un ensemble support de console inférieur devant y être agencé.

10. Ensemble garde-chaîne selon l'une ou plusieurs des revendications précédentes, dans lequel les moyens de fixation arrière sont conçus de telle manière qu'ils permettent au support (24) d'être monté sur un étai de chaîne (3) sans demander d'outil.

11. Ensemble garde-chaîne selon l'une ou plusieurs des revendications précédentes, dans lequel les moyens de fixation arrière comprennent un organe de fixation par montage par encliquetage (30) qui, lorsqu'une force appropriée est exercée, crée une connexion de montage par encliquetage sur un étai de chaîne (3).

12. Ensemble garde-chaîne selon la revendication 11, dans lequel l'organe de fixation (30) présente un corps formant un espace pour recevoir un étai de chaîne (3), le corps ayant une partie formant crochet (33) stable, conçue pour venir en prise autour de l'étai de chaîne (3), de préférence sur sa face supérieure, et une lèvre de blocage (34) élastique, qui, conjointement avec la partie formant crochet (33), délimite une ouverture d'entrée pour l'étai de chaîne (3), de manière que, par le biais de la déformation élastique de la lèvre de blocage (34), un étai de chaîne (3) puisse être déplacé dans l'espace, après que la lèvre de blocage (34) ressorte élastiquement en revenant à une position de blocage.

13. Ensemble garde-chaîne selon l'une ou plusieurs des revendications précédentes, dans lequel les moyens de fixation arrière comprennent un organe de fixation, avec un corps pour recevoir l'étai de chaîne (3), le corps comprenant une partie de base pouvant être fixée au support (24), ou réalisé d'une seule pièce avec le support (24), et une ou plusieurs parties interchangeables, logées ou pouvant être logées dans la partie de base et délimitant l'espace pour recevoir un étai de chaîne (3), les parties interchangeables créant une position de l'espace pour un étai de chaîne (3), qui peut être modifiée dans la direction transversale, par rapport à la partie de base et par conséquent au support (24).

14. Ensemble garde-chaîne selon la revendication 13, dans lequel l'organe de fixation est un composant moulé par injection de matière plastique, et les unes ou plusieurs parties interchangeables sont réalisées d'une seule pièce avec l'organe de fixation et sont créées par changement de certaines parties dans le moule d'injection.

15. Ensemble garde-chaîne selon la revendication 13 ou 14, dans lequel les parties échangeables sont conçues comme des nervures supports (59), portant contre un étai de chaîne (3) et réparties autour de la périphérie de l'espace prévu pour un étai de chaîne (3).
